# FASCICULE DE BREVET EUROPEEN

(11) **EP 0 586 316 B1**
(45) Date de publication et mention de la délivrance du brevet: **29.12.1997**
(21) Numéro de dépôt: 93420353.0
(22) Date de dépôt: 31.08.1993
(51) Int. Cl.: B03B 9/06, B03B 5/28, B03B 11/00

(54) **Procédé de triage des ordures ménagères**
Verfahren zum Sortieren von Hausmüll
Method of sorting domestic waste

(30) Priorité: 31.08.1992 FR 9210545
(43) Date de publication de la demande: 09.03.1994
(73) Titulaire: FRANCE BREVETS REALISATIONS (SARL), 26220 Dieulefit (FR)
(72) Inventeur: Jouve, Jean, F-26220 Dieulefit (FR)

(56) Documents cités:
- EP-A- 0 228 724
- EP-A- 0 387 126
- WO-A-85/04390
- DE-A- 2 602 306
- DE-A- 3 300 602
- US-A- 3 719 171
- MECHANICAL ENGINEERING (INC. CIME) vol. 97, no. 9 , Septembre 1975 , NEW YORK US page 45
- SOVIET INVENTIONS ILLUSTRATED Section Ch, Week E10, 21 Avril 1982 Derwent Publications Ltd., London, GB; Class J, AN 19363E/10 & SU-A-831 203 (ALUM MAGN ELECTR IND) 28 Mai 1981

## Description

La présente invention concerne un procédé de triage des ordures ménagères qui consiste à séparer certains composants tels que matières plastiques, verres et métaux, des matières organiques réutilisables pour la fabrication de composts.

Le tri et le criblage sont effectués en faisant flotter les ordures ménagères dans une trémie pyramidale remplie d'eau. Les ordures ménagères restent sur une grille qui retient les plastiques alors que les métaux et les verres passent à travers celle-ci car ils sont plus lourds. Ils descendent au fond de la trémie où ils se déposent dans la partie inférieure.

EP-A-0 387 126 concerne un procédé et une installation de traitement des ordures ménagères. L'installation comporte une chaîne principale et une chaîne secondaire raccordées au crible secondaire de la chaîne principale. Cette chaîne secondaire comporte un poste de triage densimétrique raccordé à un pulpeur alimentant un poste de criblage humide. Les matières solubles provenant du poste de criblage humide sont essorées avant d'être mélangées avec les matériaux compostables provenant de la chaîne principale.

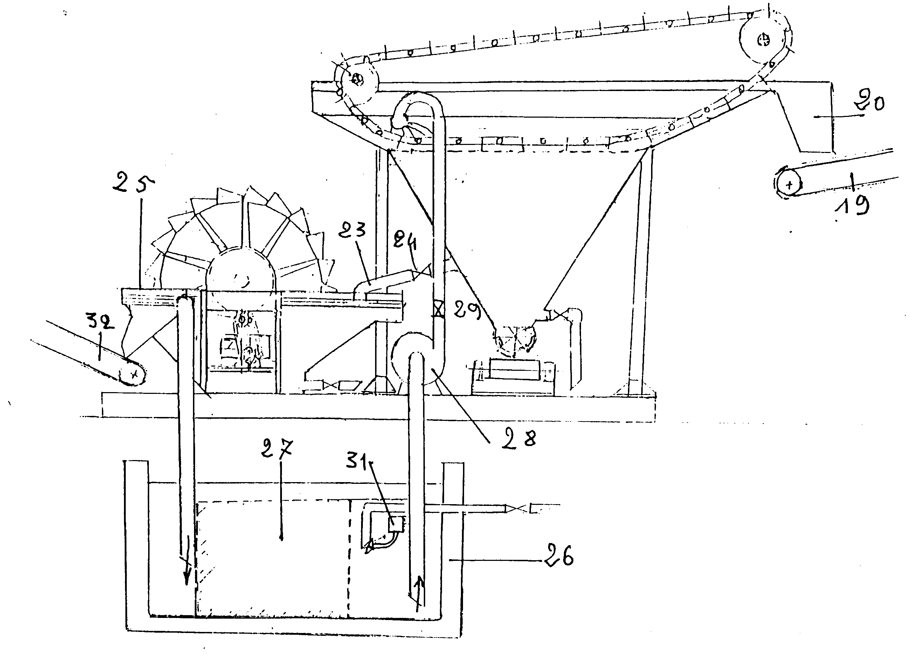

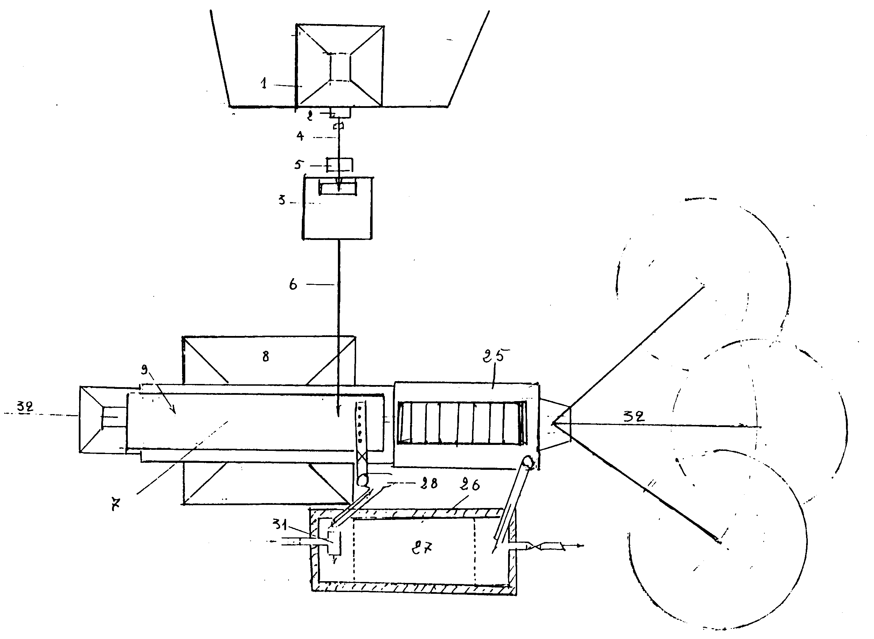

Le figure 1/3 représente une vue en plan du procédé.

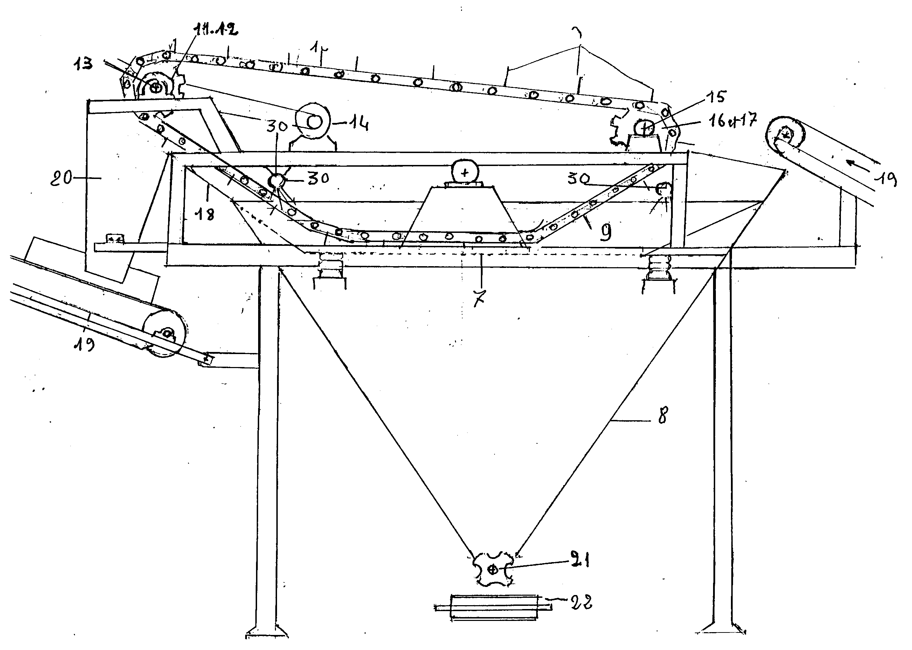

La figure 2/3 représente une vue en coupe du procédé.

La figure 3/3 représente une vue d'ensemble de l'installation.

Les ordures ménagères sont déposées dans une trémie pyramidale (1) avec un chargeur à godets à pneus ou un camion. A la sortie de cette trémie (1) se trouve un distributeur (2) qui dose la quantité d'ordures ménagères qui va au broyeur (3) par l'intermédiaire d'un tapis transporteur (4). A l'entrée du broyeur (3) d'homogénéisation de type 12/18 KHA se trouve un détecteur d'imbroyables (5). A la sortie du broyeur (3), un autre tapis transporteur (6) prend les ordures broyées et les amène à la grille d'un crible (7) immergé sur la trémie pyramidale (8). Cette grille au module 15 est immergée dans l'eau. Sur cette grille passent des raclettes (9) avec peignes qui traînent les ordures ménagères.

Les raclettes (9) sont entraînées par deux chaînes (10) latérales à maillons avec tasseaux de fixation. Les chaînes (10) sont entraînées par deux pignons (11 et 12) et un arbre menant (13) accouplés avec motovariateur (14) de vitesse. L'arbre mené (15) comporte également deux pignons (16 17) où passent les chaînes (10). L'arbre menant (13) se trouve surélevé par rapport à l'arbre mené (15) de 50 à 80 cm.

Le trémie (8), sur sa partie supérieure est rectangulaire.

L'égouttage des ordures ménagères se fait sur une tôle (18) en pente à l'extrémité de la grille (7) vers la sortie de la chaîne (10).

Les ordures ménagères qui tombent à l'entrée de la grille (7) sont prises par les raclettes (9) qui les traînent dans l'eau sur la grille (7), facilitant le passage des matières organiques à travers les trous. Ceux-ci ne se bouchent pas grâce à l'eau qui dilue et suspend les matières, au frottement des raclettes (9) et aux vibrations de la grille (7). Les raclettes (**9**) entraînent les ordures sur la tôle perforée (**18**) où s'effectue l'égouttage.

A l'extrémité de la tôle (**18**), les matières plastiques lavées sont reprises par un tapis transporteur (**19**) par l'intermédiaire d'une goulotte (**20**) pour être éventuellement comprimées et mises en balles. Les matières organiques, les verres et les métaux tombent sous la grille (**7**). Les métaux et les verres tombent au fond de la trémie pyramidale (**8**) où une vanne écluse (**21**) les évacue.

Un autre tapis transporteur (**22**) les évacue en tas stockés en attente de transformation.

Au tiers inférieur de la hauteur de la trémie (**8**), sur une des faces, un tuyau (**23**) de ⌀ 180 avec vanne de régulation (**24**) prend l'eau et les matières organiques en suspension pour les amener vers une décanteuse à roue (**25**) à godets perforés.

L'eau d'essorage est évacuée par gravité dans le bassin de filtration (**26**).

Ce bassin (**26**) comprend l'arrivée d'eau de la roue essoreuse (**25**), le matériau filtrant avec clinoptilolite (**27**) pour capter les particules de métaux lourds et neutraliser les odeurs, la sortie du matériau filtrant avec une pompe (**28**) avec vanne de débit (**29**) qui envoie l'eau filtrée au crible (**7**) par une rampe d'arrosage (**30**) à l'arrivée des ordures ménagères.

La perte d'eau (environ 20 %) utilisée pour la fermentation de la pulpe des ordures est compensée à l'aide d'une vanne régulatrice (**31**). Après essorage, la pulpe contenant environ 20 % d'eau pour la fermentation du compost est reprise par un tapis transporteur mobile (**32**) se déplaçant en avec de cercle et permettant d'obtenir un stock important de compost en respectant une certaine durée de compostage.

La clinoptilolite saturée du matériau filtrant (**27**) est changée. Après analyses, si elle contient uniquement des matières organiques, elle sert à enrichir le compost.

## Revendications

1. Procédé de triage des ordures ménagères caractérisé en ce qu'il utilise:
- une trémie pyramidale (1) remplie d'eau destinée à faire flotter les matières plastiques qui restent sur une grille tandis que les verres et les métaux tombent au fond de la trémie ;
- un distributeur (2) qui dose la quantité des ordures ménagères ;
- un tapis transporteur (4) qui amène les ordures ménagères jusqu'à un broyeur d'homogénéisation (3) de type 12/18 KHA équipé d'un détecteur d'imbroyables (5) ;
- un tapis transporteur (6) qui amène les ordures broyées à la grille d'un crible (7) au module 15 immergé sur une seconde trémie (8) pyramidale ;
- des raclettes (9) avec peignes entraînées par deux chaînes (10) latérales qui traînent les ordures ménagères dans l'eau sur la grille facilitant ainsi le passage des matières organiques à travers les trous qui ne se bouchent pas grâce à l'eau qui dilue et suspend les matières, au frottement des raclettes et aux vibrations de la grille ;
- une tôle perforée (18) où les ordures entraînées par les raclettes (9) s'égouttent ;
- un tapis transporteur (19) pour recevoir les ordures de la tôle perforée et une goulotte (20) qui évacuent les matières plastiques lavées et essorées ;
- une vanne écluse (21) qui évacue les métaux et les verres tombés par sédimentation au fond de la trémie (8) ;
- un tuyau (23) avec vanne de régulation (24) qui prend l'eau et les matières organiques en suspension de la trémie (8) pour les amener vers une décanteuse à roue (25) à godets perforés ;
- un bassin de filtration (26) qui reçoit l'eau d'essorage évacuée par gravité, le bassin (26) comprend l'arrivée d'eau de la roue essoreuse (25), le matériau filtrant avec clinoptilolite (27) pour piéger les particules de métaux lourds et neutraliser les odeurs, la sortie du matériau filtrant avec une pompe (28) avec vanne de débit (29) aui envoie l'eau filtrée au crible (7) par une rampe d'arrosage (30) à l'arrivée des ordures ménagères ;
- une vanne régulatrice (31) qui compense la perte en eau, environ 20 %, utilisée pour la fermentation de la pulpe des ordures ménagères ;
- un tapis transporteur mobile (32) se déplaçant en arc de cercle qui distribue la pulpe essorée de manière à obtenir un stock important de compost en respectant une certaine durée de compostage ;
- la clinoptilolite (27) du matériau filtrant qui, après analyses, sert à enrichir le compost.

2. Procédé selon la revendication 1 caractérisé en ce que le criblage des ordures ménagères s'effectue dans l'eau.

3. Procédé selon la revendication 1 caractérisé en ce qu'il utilise des raclettes spéciales avec peignes pour l'enlèvement et le lavage des matières plastiques.

4. Procédé selon la revendication 1 caractérisé en ce que l'enlèvement des granules métalliques et minéraux ainsi que les verres est effecuté par sédimentation dans la trémie 8.

5. Procédé selon la revendication 1 caractérisé en ce que l'essorage de la pulpe des ordures ménagères est effectué avec un réglage de l'humidité nécessaire à la fermentation selon le calibrage des trous des godets.

6. Procédé selon la revendication 1 caractérisé en ce que les piégeage des particules de métaux lourds et la neutralisation des odeurs sont effectués par la clinoptilolite.

7. Procédé selon la revendication 1 caractérisé en ce que les matières organiques retenues par la clinoptilolite sont utilisées pour l'enrichissement du compost.

## Claims

1. A household waste sorting process characterized in that it uses:
- a pyramid-shaped hopper (1) filled with water destined to cause the plastic material remaining on a mesh-screen to float whereas the glass and metal items fall into the bottom of the hopper;
- a distributor (2) which doses the quantity of household waste;
- a belt conveyor (4) which conveys the household waste to a homogenizing crusher (3) of the 12/18 KHA type equipped with a detector (5) of non-crushable materials;
- a belt conveyor (6) which conveys the crushed waste to the mesh-screen of a screen (7), modulus 15, immersed on a second pyramid-shaped hopper(8);
- scrapers (9) with combs driven by two lateral chains (10) which draw the household waste in the water onto the mesh-screen thus facilitating passage of organic matter through the holes which do not clog up due to the water which dilutes and suspends the matter, to the friction of the scrapers, and to the vibrations of the mesh-screen;
- a perforated plate (18) where the waste entrained by scrapers (19) is drained;
- a belt conveyor (19) to receive the waste from the perforated plate and a chute (20) which remove the scrubbed and centrifuged plastic material;
- a paddle valve (21) which removes the metals and glass which have fallen to the bottom of hopper (8) through sedimentation;
- a pipe (23) with regulator valve (24) which takes the water and the organic matter in suspension from hopper (18) and conveys them to a wheel-type centrifuge (25) with perforated buckets;
- a filter-tank (26) which receives the centrifuged water removed by gravity, basin (26) includes the water inlet from centrifugal wheel (25), the filtering material with clinoptilolite (27) to trap the particles of heavy metals and neutralize the odors, the filtering material outlet with a pump (28) with flow valve (29) which conveys the filtered water to screen (7) via sprinkling ramp (30) at household waste inlet;
- a regulator valve (31) which compensates the loss of water, around 20%, used for fermentation of the household waste pulp;
- a mobile belt conveyor (32) moving in an arc which distributes the centrifuged pulp in order to obtain a substantial store of compost whilst complying with a certain composting duration;
- the clinoptilolite (27) of the filtering material which, after analyses, is used to enrich the compost.

2. A process according to claim 1 characterized in that screening of the household waste is carried out in water.

3. A process according to claim 1 characterized in that it uses special scrapers with combs for removal and scrubbing of plastic material.

4. A process according to claim 1 characterized in that removal of the metallic and mineral pellets as well as the glass is carried out through sedimentation in hopper 8.

5. A process according to claim 1 characterized in that centrifuging of the pulp of the household waste is carried out with humidity adjustment necessary for fermentation according to the bucket hole calibration.

6. A process according to claim 1 characterized in that trapping of heavy meal particles and neutralization of odors are carried out by the clinoptilolite.

7. A process according to claim 1 characterized in that the organic matter retained by the clinoptilolite is used to enrich the compost.

## Patentansprüche

1. Sortierverfahren für Hausmüll , gekennzeichnet durch den Einsatz :
- eines mit Wasser gefüllten pyramidenförmigen Trichters (1) zur Flotation von Kunststoffen, welche auf einem Gitter bleiben, während Glas und Metalle auf den Trichterboden fallen;
- einem Verteiler (2), welcher die Menge des Hausmülls dosiert;
- einem Förderband (4), welches den Hausmüll bis zu einem Homogenisierverkleinerer (3), Typ 12/18 KHA, welcher mit einem Detektor nicht zerkleinerten Gutes (5) ausgerüstet ist;
- eines Förderbandes (6), welches den zerkleinerten Müll zum Gitter eines Siebs (7) am eingetauchten Modul 15 aufeinen zweiten pyramidenförmigen Trichter (8) transportiert;
- von Abstreifern (9) mit über seitliche Ketten (10) angetriebenen Kämmen, welche den Hausmüll ins Wasser auf dem Gitter ziehen, damit die organischen Stoffe durch die die Gitterlöcher, die sich dank ihrer Auflösung und Suspension, der Reibung der Abstreifer und der Vibrationen des Gitters nicht verstopfen, fallen;
- eines Siebblechs (18), wo der von den Abstreifern (9) mitgezogene Hausmüll abgetropft wird;
- eines Förderbands (19), einer Rinne (20), welche die gewaschenen und getrockneten Kunststoffe ableiten;
- einer Schleusenklappe (21), welche die Metalle und das Glas, die sich am Boden des Trichters (8) abgelagert haben, ableitet;
- eines Rohrs (23) mit Regelventil (24) zur Ableitung des Wassers und der schwebenden organischen Stoffe des Trichters (8) zu einer Radabsetzanlage (25) mit Siebbechern;
- eines Filterbeckens (26), zur Aufnahme des durch die Schwerkraft abgeleiteten Zentrifugalwassers; zum Becken (26) gehört die vom Zentrifugalrad (25) kommende Wasserzufuhr, das Filtermaterial mit Klinoptilolit (27) zur Absonderung der Schwermetallpartikel und Geruchsneutralisierung, der Filtermaterialaustritt mit einer Pumpe (28) mit Mengenregler (29), welcher das gefilterte Wasser zum Sieb (7) mittels einer Berieselungsrampe (30) am Eintritt des Hausmülls leitet;
- eines Regelventils (31) zum Ausgleich des Wasserverslusts, etwa 20%, infolge der Fermentation des Hausmüllschlamms;
- eines mobilen Transportbands (32), welches sieh kreisbogenförmig zur Verteilung des getrockneten Schlamms verschiebt, so dass nach einer bestimmten Kompostierungsdauer ein beachtlicher Kompostvorrat entsteht;
- des Klinoptilolits (27) des Filtermaterials, welches, nach Durchführung von Analysen, zur Kompostanreicherung dient.

2. Verfahren gemäss Patentanspruch 1, gekennzeichnet dadurch, dass die Siebung des Hausmülls im Wasser erfolgt.

3. Verfahren gemäss Patentanspurch 1, gekennzeichnet dadurch, dass es Spezialabstreifer mit Kämmen zur Beseitigung und zum Waschen der Kunststoffe verwendet.

4. Verfahren gemäss Patentanspruch 1, gekennzeichnet dadurch, dass die Beseitigung von Metall- und Mineralgranulat sowie von Glas durch Absetzen im Trichter 8 erfolgt.

5. Verfahren gemäss Patentanspruch 1, gekennzeichnet dadurch, dass das Trocknen des Hausmüllschlamms mit einer für die Fermentation notwendigen Feuchtigkeitsregelung je nach Grösse der Bechersieblöcher erfolgt.

6. Verfahren gemäss Patentanspruch 1, gekennzeichnet dadurch, dass das Abscheiden schwere Metallpartikel und die Geruchsneutralisierung durch das Klinoptilolit erfolgen.

7. Verfahren gemäss Patentanspruch 1, gekennzeichnet dadurch, dass die von dem Klinoptilolit abgesehiedenen organischen Stoffe zur Kompostanreicherung verwendet werden.
